# EUROPÄISCHE PATENTSCHRIFT

(11) **EP 3 900 908 B1**
(45) Veröffentlichungstag und Bekanntmachung des Hinweises auf die Patenterteilung: **09.10.2024**
(21) Anmeldenummer: 21169591.1
(22) Anmeldetag: 21.04.2021
(51) Int. Cl.: B29C 48/09, B29C 48/13, E03C 1/02, F16L 11/15, F16L 33/00, F16L 33/28, B29C 48/00, B29C 48/30, B29C 48/21, B29C 48/151

(54) **DRUCKSCHLAUCH**
DRUCKSCHLAUCH
TUYAU RÉSISTANT À LA PRESSION

(30) Priorität: 21.04.2020 DE 202020001661 U
(43) Veröffentlichungstag der Anmeldung: 27.10.2021
(73) Patentinhaber: UNIWELL Rohrsysteme GmbH & Co. KG, 96106 Ebern (DE)
(72) Erfinder: MEYER, Hans-Peter, 58675 Hemer (DE)
(74) Vertreter: Weyers, Christopher

(56) Entgegenhaltungen:
- CN-A- 111 022 788
- DE-A1- 102014 209 817
- DE-A1- 102017 002 275

## Beschreibung

Die Erfindung betrifft einen Druckschlauch für ein wasserführendes System zum Anschließen von Sanitärarmaturen gemäß Oberbegriff des Anspruchs 1.

Aus der DE 10 2017 002 275 A1 ist bereits ein Druckschlauch der vorgenannten Art bekannt. Solche Druckschläuche kommen im Rahmen der Installation wasserführender Systeme zum Einsatz. Ein bevorzugter Verwendungszweck solcher Druckschläuche liegt in der Installation von Sanitärarmaturen bzw. im Sanitärbereich. In diesem Zusammenhang ist unter dem Begriff "Sanitärarmatur", wie er im Folgenden verwendet wird, eine vorzugsweise fest installierte oder bewegliche konstruktive Einrichtung zu verstehen, die beispielsweise im Haushaltsbereich zur bedarfsweisen Wasserentnahme ausgebildet ist. Beispiele für Sanitärarmaturen sind insbesondere ausgewählt aus der Gruppe der Waschtisch- und/oder Duscharmaturen und/oder ausgewählt aus der Gruppe der Küchenarmaturen, insbesondere Spültischarmaturen, und/oder ausgewählt der Gruppe der (Hand-)Brausen, insbesondere Duschbrausen und/oder Küchenbrausen. Darüber hinaus ist auch der Einsatz der in Rede stehenden Druckschläuche beispielsweise zur Wasserversorgung von Geschirrspül- und/oder Waschmaschinen möglich.

Aufgrund der einstückigen Ausbildung des Innenschlauchs und des abweichend zum Innenschlauch ausgebildeten Anschlussstücks entfällt bei dem aus der DE 10 2017 002 275 A1 bekannten Druckschlauch eine kraftschlüssige Anbindung des Anschlussstücks an ein Schlauchende des Druckschlauchs. Damit können Beeinträchtigungen in Bezug auf das Strömungsverhalten im Bereich des Anschlussstücks wirksam ausgeschlossen werden. Entlang der gesamten Länge des Druckschlauchs werden gleichmäßige Strömungsverhältnisse realisiert, wobei der maximale Strömungsquerschnitt auch im Bereich des Anschlussstücks zur Verfügung stehen kann. Dies ist insbesondere bei vergleichsweise dünnwandig ausgebildeten Innenschläuchen, beispielsweise mit einer Wandstärke im Bereich von 1 mm, besonders vorteilhaft. Überdies wird durch die einstückige Ausbildung des Innenschlauchs und des Anschlussstücks die Bildung von Leckagen ausgeschlossen.

Weiter ist herauszustellen, dass die einstückige Ausbildung des Innenschlauchs und des Anschlussstücks aus einem Kunststoffmaterial eine kostengünstige bzw. ressourcensparende Herstellung ermöglicht, die nicht den vorgenannten Preisschwankungen börsenorientierter metallischer Legierungen bzw. Rohstoffe unterworfen ist.

Was die einstückige Herstellung des Innenschlauchs und des Anschlussstücks anbelangt, so ist die Extrusionstechnik bevorzugt. Auf diese Weise kann eine kostengünstige Anbindung des Anschlussstücks bzw. Anschlussfittings an den Innenschlauch im Rahmen eines kontinuierlichen Fertigungsprozesses umgesetzt werden, was insbesondere für eine Serienproduktion vorteilhaft ist.

Die Anschlussgeometrie des Anschlussstücks kann in Bezug auf die Kontur- und/oder Passgenauigkeit sowie das Abdichtverhalten mit den aus dem Stand der Technik bekannten separat ausgebildeten Anschlussstücken, beispielsweise aus Messing, vergleichbar sein. Insbesondere ist keine nachgeordnete formgebende bzw. materialabtragende Bearbeitung des Anschlussstücks notwendig, so dass der aus der DE 10 2017 002 275 A1 bekannte Druckschlauch in wenigen Arbeitsschritten erhältlich ist. Insbesondere sind der Innenschlauch und das Anschlussstück in lediglich einem gemeinsamen Extrusionsprozess erhältlich.

Zu weiteren Vorteilen, Eigenschaften und Merkmalen des bekannten Druckschlauchs wird auf den Offenbarungsgehalt der DE 10 2017 002 275 A1 verwiesen, der vollständig in den Offenbarungsgehalt der nachfolgend beschriebenen Erfindung einbezogen wird. So ist entsprechend der DE 10 2017 002 275 A1 unter dem Begriff "Anschlussstück", wie er im Rahmen der nachfolgend beschriebenen Erfindung verwendet wird, vorzugsweise ein Verbindungsteil zum dichtenden Anschließen eines Schlauchendes des Druckschlauches an ein komplementär ausgebildetes Anschlussstück einer Sanitärarmatur und/oder eines Eckventils und/oder eines Teils des wasserführenden Systems zu verstehen. Dabei weist das Anschlussstück eine vorzugsweise herstellerspezifisch und/oder länderspezifisch und ggf. genormt ausgebildete Anschlussgeometrie auf, um eine passgenaue bzw. dichtende Verbindung mit dem komplementär ausgebildeten Anschlussstück (mit entsprechend komplementärer Anschlussgeometrie) zu gewährleisten.

Der aus der DE 10 2017 002 275 A1 bekannte Druckschlauch weist eine Ummantelung, insbesondere ein Edelstahl- oder Polyestergeflecht auf, die sich über die gesamte Länge des Innenschlauchs und auch zum Teil über die Anschlussstücke an den Enden des Innenschlauchs erstreckt. Lediglich Verbindungsabschnitte an den Anschlussstücken, mit denen die Anschlussstücke dichtend an komplementäre Anschlussstücke einer Sanitärarmatur und/oder an Teile einer Wasserversorgungsleitung anschließbar sind, sind bewusst nicht von der Ummantelung umgeben. Zur vorzugsweise kraftschlüssigen Verbindung der Ummantelung mit dem Innenschlauch und den Anschlussstücken ist an jedem Schlauchende ein Klemmelement in Form einer Presshülse vorgesehen.

Der aus dem Stand der Technik bekannte zuvor beschriebene Druckschlauch weist gegenüber bekannten Druckschläuchen, bei denen die Anschlussstücke auf die Schlauchenden aufgepresst sind, bereits deutliche Vorteile auf. Allerdings bietet die Ummantelung des Druckschlauchs mit einem Edelstahl- oder Polyestergeflecht Raum für das An- bzw. Aufwachsen von Mikroorganismen, wie Bakterien, Pilzen, Algen oder sonstigen Kleinstorganismen, wobei durch die unebene Oberfläche der Umflechtung die Reinigung des Druckschlauchs erschwert wird. Insbesondere ist jedoch eine Desinfektion des Druckschlauchs zur Keimreduktion, insbesondere von Bakterien und/oder Viren, aufwändig.

Die DE 10 2014 209 817 A1 betrifft eine Schlaucheinrichtung zum Transportieren von Fluiden für ein Haushaltsgerät. Die Schlaucheinrichtung weist einen Außenschlauch und einen innerhalb des Außenschlauchs angeordneten Innenschlauch auf. Der Innenschlauch und der Außenschlauch sind durch Stege voneinander beabstandet, um einen Leckageaufnahmeraum zwischen den Schläuchen zu bilden, sodass bei einer Undichtigkeit des Innenschlauchs Flüssigkeit davon aufgenommen wird und nicht nach außen tritt. Der Außenschlauch kann hierbei als Wellschlauch oder als Glattschlauch ausgeführt sein. Ein Fortsatz des Innenschlauchs ist über ein Anschlussstück geschoben, über das die Schlaucheinrichtung mit einem Frischwasseranschluss verbindbar ist.

Vor diesem Hintergrund liegt der vorliegenden Erfindung die Aufgabe zugrunde, den aus der DE 10 2017 002 275 A1 bekannten Druckschlauch weiterzubilden und einen Druckschlauch zur Verfügung zu stellen, der sich in einfacher Weise und kostengünstig bei geringem Aufwand reinigen, insbesondere desinfizieren, lässt. Darüber hinaus soll der erfindungsgemäße Druckschlauch auch die Vorteile des bekannten Druckschlauchs aufweisen, nämlich ein gegenüber Druckschläuchen mit aufgepressten Anschlussstücken verbessertes Strömungsverhalten am Zu- und Auslauf sowie die Möglichkeit einer einfachen und kostengünstigen Fertigung des Druckschlauchs.

Die vorgenannte Aufgabe wird durch einen Druckschlauch mit den Merkmalen von Anspruch 1 gelöst. Vorteilhafte Ausgestaltungen der Erfindungen sind Gegenstand der Unteransprüche.

Wie bei dem aus der DE 10 2017 002 275 A1 bekannten Druckschlauch sind bei dem erfindungsgemäßen Druckschlauch der Innenschlauch und das Anschlussstück einstückig ausgebildet. Der bevorzugte Verwendungszweck der vorliegenden Erfindung liegt damit ebenfalls im Bereich der Installation von Sanitärarmaturen bzw. im Sanitärbereich, wie oben beschrieben.

Abweichend zu dem aus der DE 10 2017 002 275 A1 bekannten Druckschlauch ist erfindungsgemäß vorgesehen, dass der Innenschlauch von einem Glattschlauch umhüllt ist. Der insbesondere als Wellschlauch ausgebildete Innenschlauch des erfindungsgemäßen Druckschlauchs bildet dann ein Inlay in dem Glattschlauch, wobei durch den Glattschlauch eine ebene, glatte Oberfläche gebildet wird, was eine einfache Reinigung und Desinfektion des erfindungsgemäßen Druckschlauchs ermöglicht. Durch Verzicht auf eine radial außenliegende Umflechtung des Innenschlauchs werden keine Vertiefungen in der äußeren Mantelfläche des Druckschlauchs geschaffen, die das An- oder Aufwachsen von Mikroorganismen unterstützen und bei der Reinigung und/oder Desinfektion des Druckschlauches nur schwer zugänglich sind. Durch die ebene, glatte Oberfläche des erfindungsgemäßen Druckschlauchs wird der Reinigungs- und/oder Desinfektionsvorgang deutlich vereinfacht und es lässt sich eine hohe Keimreduktion bereits bei einmaliger Behandlung des Druckschlauchs mit einem Reinigungs- und/oder Desinfektionsmittel erreichen. Auch eine mechanische Reinigung der glatten äußeren Mantelfläche des erfindungsgemäßen Druckschlauchs unter Verwendung von Schwämmen und/oder Bürsten und durch Abspülen des Druckschlauchs kann bereits ausreichend sein, um die Keimbeladung signifikant zu verringern. Durch die glatte Oberfläche ist der erfindungsgemäße Druckschlauch auch weniger anfällig für Kalkablagerungen.

Der Innenschlauch kann sich im Wesentlichen über die gesamte Länge des Druckschlauchs bis zum Anschlussstück erstrecken. Vorzugsweise können an beiden Enden des Innenschlauchs Anschlussstücke vorgesehen sein, die dann die freien Enden des Druckschlauchs bilden. Der Innenschlauch und das Anschlussstück erstrecken sich vorzugsweise entlang einer gleichen Hauptachse bzw. entlang der Mittellängsachse des Druckschlauchs und können einen Hauptkanal des Druckschlauchs bilden. Das Anschlussstück bildet dann eine Austrittsöffnung des Hauptkanals, wobei der Mittelpunkt der Austrittsöffnung auf der Mittellängsachse des Druckschlauchs liegen kann. Nicht ausgeschlossen ist allerdings eine Ausführungsform, bei der der erfindungsgemäße Druckschlauch wenigstens ein weiteres seitliches Anschlussstück aufweist, das an dem Innenschlauch ausgebildet ist und ebenfalls einstückig, vorzugsweise durch Extrusion, mit dem Innenschlauch verbunden ist. Über das weitere Anschlussstück kann ein Nebenkanal geschaffen werden, der vom Hauptkanal des Druckschlauchs abzweigt.

Der Glattschlauch bildet erfindungsgemäß eine ebene äußere Mantelfläche des Druckschlauchs. Die Oberflächenrauheit (arithmetischer Mittelwert der Profilkoordinaten; mittlere Rauheit, insbesondere nach DIN 4768:1990-05) des Glattschlauchs Ra kann vorzugsweise weniger als 10 µm, weiter vorzugsweise weniger als 5 µm, besonders bevorzugt weniger als 2 µm, weiter besonders bevorzugt weniger als 1 µm, betragen. In der DIN-Norm 1672-2 ist festgelegt, dass produktberührende Oberflächen in der Nahrungsmittelindustrie eine Rauheit von weniger als oder gleich 0,8 µm aufweisen müssen. Das kann auch für die äußere Mantelfläche des erfindungsgemäßen Druckschlauchs gelten, so dass dieser leicht zu reinigen und zu desinfizieren ist.

Es ist zweckmäßig, wenn der Glattschlauch unmittelbar gegen den Innenschlauch anliegt. Dies ermöglicht eine einfache und kostengünstige Fertigung des erfindungsgemäßen Druckschlauchs. Wenn der Glattschlauch unmittelbar gegen den Innenschlauch anliegt, vorzugsweise über seine gesamte innere Mantelfläche, kann dies zu einer höheren Stabilität, insbesondere einer höheren Druckstabilität, des erfindungsgemäßen Druckschlauches beitragen. Nicht ausgeschlossen ist aber, dass zwischen dem äußeren Glattschlauch und dem Innenschlauch wenigstens ein weiterer Schlauch und/oder ggf. eine Umflechtung vorgesehen ist, um dem erfindungsgemäßen Druckschlauch weitere Stabilität zu verleihen.

Vorzugsweise ist der Innenschlauch im Wesentlichen über seine gesamte Länge von dem Glattschlauch umhüllt bzw. ummantelt. Der erfindungsgemäße Druckschlauch weist dann über seine gesamte Länge - bis zu den Anschlussstücken - eine ebene Oberfläche auf. Der Glattschlauch kann sich dann über die gesamte Länge des Innenschlauchs erstrecken und auch zum Teil über das Anschlussstück. Verbindungsabschnitte an dem Anschlussstück, mit denen das Anschlussstück dichtend an komplementäre Anschlussstücke einer Sanitärarmatur und/oder an Teile einer Wasserversorgungsleitung anschließbar ist, können dagegen von dem Glattschlauch nicht umgeben sein, was die Montage des Druckschlauchs an Teile des wasserführenden Systems vereinfacht.

Zur Befestigung des Glattschlauchs mit dem Innenschlauch kann ein Klemmelement, insbesondere eine Presshülse, vorgesehen sein, mit dem der Glattschlauch auf den Innenschlauch aufgepresst ist. Auch eine Klebstoffverbindung ist möglich.

Um das Eindringen von Flüssigkeit in den Bereich zwischen dem Innenschlauch und dem Glattschlauch zu verhindern, sind der Innenschlauch und der Glattschlauch zumindest an den Schlauchenden flüssigkeitsdicht miteinander verbunden, beispielsweise unter Verwendung von wenigstens einem Klemmelement, wie einer Presshülse. Auch eine flüssigkeitsdichte Verklebung von Innenschlauch und Glattschlauch sind möglich, insbesondere im Bereich des Schlauchendes. Von Vorteil ist es, wenn sich der Glattschlauch über das Ende des Innenschlauchs hinweg bis zum Anschlussstück erstreckt und dann mit dem Anschlussstück und/oder dem Innenschlauch im Bereich des Schlauchendes verklebt ist.

Vorzugsweise ist keine äußeren Umflechtung des Innenschlauchs vorgesehen. Der Innenschlauch kann dann, wie oben beschrieben, von einem Außenschlauch umgeben sein, insbesondere von einem Glattschlauch. Durch die Verwendung des Außenschlauchs lassen sich die mechanischen Eigenschaften des Druckschlauchs, insbesondere die (Druck-)Stabilität, verbessern.

In Bezug auf die Eignung des erfindungsgemäßen Druckschlauches für die Trinkwasserinstallation und die Eignung des erfindungsgemäßen Druckschlauchs zum Leiten von Trinkwasser wird auf den Offenbarungsgehalt der DE 10 2017 002 275 A1 verwiesen und dieser Offenbarungsgehalt ausdrücklich in den Offenbarungsgehalt der vorliegenden Erfindungsbeschreibung einbezogen.

Der erfindungsgemäße Druckschlauch ist vorzugsweise für einen Wasserdruck von wenigstens 30 bar, weiter vorzugsweise von wenigstens 40 bar, besonders bevorzugt von wenigstens 50 bar, oder mehr ausgebildet. Die Erfindung sieht in diesem Zusammenhang vor, dass der Innenschlauch und/oder ein Außenschlauch, insbesondere der Glattschlauch, bei Betriebsdrücken von wenigstens 30 bar, vorzugweise von wenigstens 40 bar, besonders bevorzugt von wenigstens 50 bar, oder mehr druckstabil ist.

Im Übrigen ist der Druckschlauch vorzugsweise dazu ausgebildet, Wasserströme mit einer Temperatur von wenigstens 90 °C, vorzugsweise von wenigstens 100 °C, zu leiten, was materialabhängig ist. In diesem Zusammenhang kann der Innenschlauch und/oder ein Außenschlauch, insbesondere der Glattschlauch, aus einem bei Fluidtemperaturen von wenigstens 90 °C, vorzugsweise von wenigstens 100 °C, beständigen Kunststoff bestehen und/oder einen solchen Kunststoff aufweisen.

Der Innendurchmesser des Druckschlauchs, insbesondere der Innendurchmesser des Innenschlauchs, kann vorzugsweise wenigstens 5 mm, weiter vorzugsweise wenigstens 6 mm, besonders bevorzugt wenigstens 7 mm und/oder höchstens 15 mm, vorzugsweise höchstens 10 mm, besonders bevorzugt beispielsweise 8 mm, betragen.

Der Außendurchmesser des Druckschlauchs, insbesondere der Außendurchmesser des Glattschlauchs, kann wenigstens 8 mm, vorzugsweise wenigstens 9 mm, besonders bevorzugt wenigstens 10 mm und/oder höchstens 20 mm, vorzugsweise höchstens 15 mm, beispielsweise 10 mm, betragen.

Die Wandstärke eines Außenschlauchs, insbesondere eines Glattschlauchs, kann erfindungsgemäß im Bereich zwischen 0,5 mm und 5 mm, vorzugsweise im Bereich zwischen 0,5 mm und 4 mm, bevorzugt im Bereich zwischen 0,7 mm und 3 mm, besonders bevorzugt im Bereich zwischen 0,8 mm und 2 mm, liegen.

Die Zugfestigkeit des Druckschlauchs und/oder die Wandstärke des Innenschlauchs kann im Bereich der Werte liegen, die in der DE 10 2017 002 275 A1 offenbart sind. Der Offenbarungsgehalt der DE 10 2017 002 275 A1 wird auch an dieser Stelle ausdrücklich in den Offenbarungsgehalt der vorliegenden Erfindungsbeschreibung einbezogen.

Weitere Vorteile, Merkmale, Eigenschaften und Aspekte der vorliegenden Erfindung ergeben sich aus den Ansprüchen und der folgenden Beschreibung bevorzugter Ausführungsformen anhand der Zeichnung. Die beschriebenen und/oder gezeichneten Vorteile, Merkmale, Eigenschaften und Aspekte lassen sich bedarfsweise miteinander kombinieren, auch wenn dies nicht im Einzelnen beschrieben oder gezeigt ist. Angegebene Wertebereich umfassen alle ganzzeiligen Zwischenwerte.

In der Zeichnung zeigen
- Fig. 1: eine Seitenansicht eines erfindungsgemäßen Druckschlauchs gemäß einer ersten Ausführungsform,
- Fig. 2: einen schematischen Längsschnitt des in Fig. 1 gezeigten Druckschlauchs,
- Fig. 3: eine Seitenansicht eines erfindungsgemäßen Druckschlauchs gemäß einer zweiten Ausführungsform und
- Fig. 4: einen schematischen Längsschnitt des in Fig. 3 gezeigten Druckschlauchs.

Bei der nachfolgenden Beschreibung werden für gleiche und gleichartige Bauteile und Komponenten dieselben Bezugszeichen verwendet, wobei sich entsprechende Eigenschaften und Merkmale ergeben, auch wenn keine wiederholte Beschreibung erfolgt.

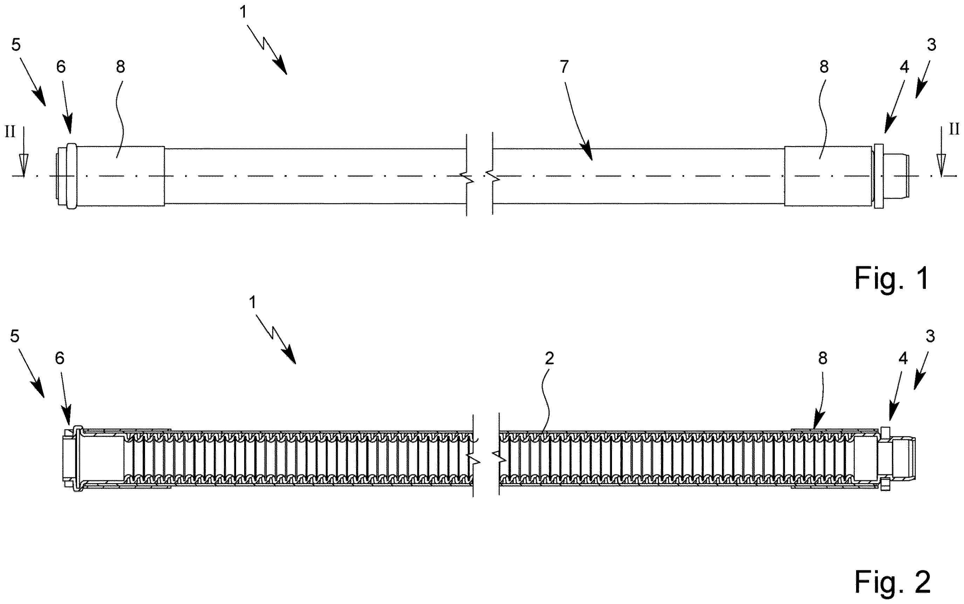

Fig. 1 zeigt in einer schematischen Seitenansicht einen erfindungsgemäßen Druckschlauch 1 für ein (nicht dargestelltes) wasserführendes System. Insbesondere ist der Druckschlauch 1 zum Anschließen von Sanitärarmaturen an eine Wasserversorgungsleitung, insbesondere ein Eckventil, ausgebildet. Fig. 2 zeigt einen schematischen Längsschnitt des erfindungsgemäßen Druckschlauches 1 gemäß Fig. 1.

Der Druckschlauch 1 weist einen gewellten Innenschlauch 2 zur Führung eines Wasserstroms, insbesondere eines Trinkwasserstroms, auf.

Wie sich insbesondere aus Fig. 2 ergibt, sind an einem ersten Schlauchende 3 des Druckschlauches 1 ein erstes Anschlussstück 4 und an einem zweiten Schlauchende 5 ein zweites Anschlussstück 6 ausgebildet bzw. ausgeformt. Dabei ist das erste Anschlussstück 4 zur Verbindung des ersten Schlauchendes 3 mit einem komplementär ausgebildeten Anschlussstück einer Sanitärarmatur und das zweite Anschlussstück 6 zur Verbindung des zweiten Schlauchendes 5 mit einem komplementär ausgebildeten Anschlussstück einer Wasserversorgungsleitung, insbesondere eines Eckventils, ausgebildet.

Erfindungsgemäß sind der Innenschlauch 2 und die Anschlussstücke 4, 6 einstückig, vorzugsweise mittels Extrusion, hergestellt.

Um eine druckfeste Ausbildung des erfindungsgemäßen Druckschlauchs 1 zu gewährleisten, ist eine Ummantelung 7 vorgesehen. Die Ummantelung 7 wird gebildet durch einen Glattschlauch aus einem polymeren Material. Die Ummantelung 7 erstreckt sich beim dargestellten Ausführungsbeispiel über die gesamte Länge des Innenschlauches 2 und erstreckt sich auch zum Teil über die Anschlussstücke 4, 6. Verbindungsabschnitte an den Anschlussstücken 4, 6, mit denen die Anschlussstücke 4, 6 dichtend an komplementäre Anschlusstücke einer Sanitärarmatur und/der an Teile einer Wasserversorgungsleitung anschließbar sind, sind bewußt nicht von der Ummantelung 7 umgeben. Dies vereinfacht die Montage des Druckschlauches 1 an Teile des wasserführenden Systems. Zur vorzugsweise kraftschlüssigen Verbindung der Ummantelung 7 mit dem Innenschlauch 2 und den Anschlusstücken 4, 6 ist an jedem Schlauchende 3, 5 ein Klemmelement 8 in Form einer Presshülse vorgesehen. Die Klemmelemente 8 pressen die Ummantelung 7 umfangseitig gegen den Innenschlauch 2 und gegen die Anschlusstücke 4, 6. Hierbei geht es lediglich darum, die Ummantelung 7 zu befestigen, und nicht, wie im Stand der Technik, den Innenschlauch 2 und die Anschlusstücke 4 , 6 miteinander zu verbinden.

Die Ausbildung der Anschlussstücke 4, 6 im Einzelnen ist in der DE 10 2017 002 275 A1 beschrieben. Der Offenbarungsgehalt der DE 10 2017 002 275 A1 wird insoweit in den Offenbarungsgehalt der vorliegenden Erfindungsbeschreibung einbezogen.

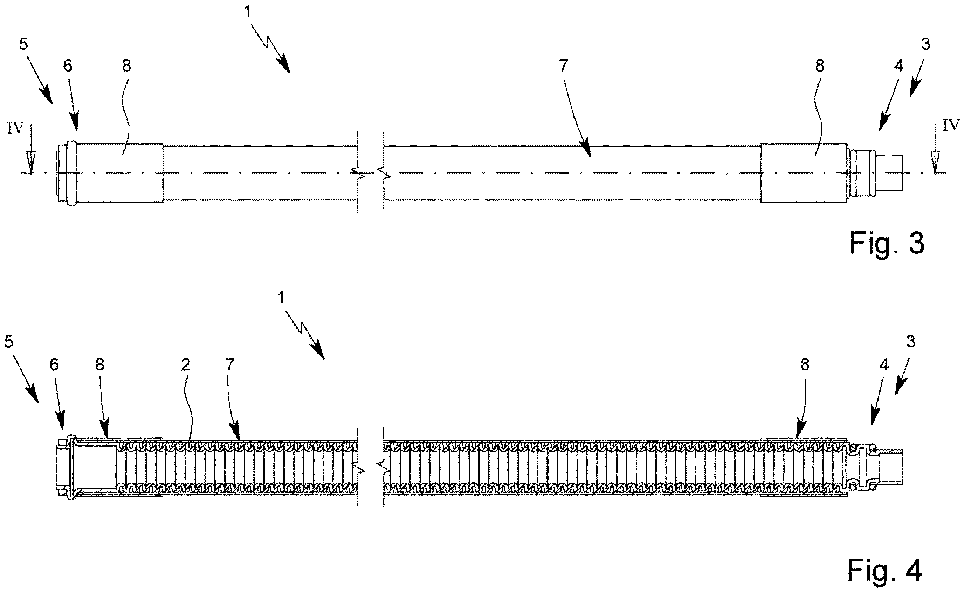

Fig. 3 zeigt in einer schematischen Seitenansicht einen erfindungsgemäßen Druckschlauch 1 gemäß der zweiten Ausführungsform. Fig. 4 zeigt einen schematischen Längsschnitt des in Fig. 3 gezeigten erfindungsgemäßen Druckschlauches 1. Die zweite Ausführungsform des erfindungsgemäßen Druckschlauchs 1 unterscheidet sich von der ersten Ausführungsform insbesondere hinsichtlich der Ausbildung des ersten Anschlussstücks 4, wohingegen das zweite Anschlussstück 6 in beiden Ausführungsformen im Wesentlichen gleich ausgebildet ist. Es versteht sich jedoch, dass auch das erste Anschlussstück 6 im Sinne der erfindungsgemäßen Lösung hersteller- und/oder länderspezifisch angepasst sein kann.

Was die Ausgestaltung der Anschlussstücke 4, 6 der in den Figuren 3 und 4 gezeigten Ausführungsformen des Druckschlauchs 1 betrifft, wird wiederum auf den Offenbarungsgehalt der DE 10 2017 002 257 A1 verwiesen und dieser Offenbarungsgehalt in die Beschreibung der vorliegenden Erfindung vollumfänglich einbezogen.

Durch die Verwendung eines Glattschlauchs, der den Innenschlauch 2 umgibt und eine äußere ebene Mantelfläche des Druckschlauchs 1 bildet, lässt sich der Druckschlauch 1 in einfacher Weise reinigen und desinfizieren. Zudem lassen sich durch den Glattschlauch sehr gute mechanische Eigenschaften des Druckschlauchs 1 erreichen, so dass der Druckschlauch auch für den Einsatz bei hohen Betriebsdrücken geeignet ist.

Die Ummantelung 7 bzw. der Glattschlauch ist besonders bevorzugt desinfizierbar bzw. sterilisierbar. Hierzu kann dieser zumindest auf einer dem Innenschlauch 2 abgewandten bzw. Außenseite zur Desinfektion bzw. Sterilisation ausgebildet oder ausgerüstet sein.

Hierbei ist bevorzugt, dass die Ummantelung 7 bzw. der Druckschlauch 1 in seinen Eigenschaften bzw. seiner Form durch die Desinfektion bzw. Sterilisation nicht verändert bzw. beeinträchtigt wird.

Zur Desinfektion bzw. Sterilisation kann die Ummantelung 7 bzw. der Glattschlauch dazu geeignet sein, beispielsweise wie in der DIN EN 285 Version 2016-05 oder DIN EN ISO 20857 Version 2013-08 oder DIN EN ISO 11737-2 Version 2020-07 beschrieben, sterilisierbar zu sein.

Bevorzugt ist die Ummantelung 7 temperaturfest. Besonders bevorzugt ist die Ummantelung 7 temperaturfest bis mindestens 120 °C.

Alternativ oder zusätzlich ist die Ummantelung bevorzugt beständig gegenüber sterilisierendem Wasserdampf, beispielsweise Wasserdampf bei mehr als 110 °C, bevorzugt mehr als 120 °C, und/oder bei 15 Minuten Aussetzen der Ummantelung 7 mit dem Wasserdampf, mindestens unter Normaldruck und insbesondere unter mindestens 2 bar Umgebungsdruck.

Temperaturfest ist die Ummantelung 7 hierbei vorzugsweise, wenn Materialeigenschaften der Ummantelung 7 unter den angegebenen Bedingungen zumindest im Wesentlichen unverändert bleiben.

Alternativ oder zusätzlich ergibt sich die Desinfizierbarkeit durch eine desinfektionsmittelbeständige Oberfläche bzw. ein desinfektionsmittelbeständiges Material der Ummantelung 7 bzw. des Glattschlauchs.

Insbesondere ist die Ummantelung 7 jedenfalls oberflächlich beständig gegen alkoholische Desinfektionsmittel wie Ethanol, Isopropanol und/oder chloridhaltige Lösungen, insbesondere auf Basis von Natriumhypochlorit. Desinfektionsmittelbeständig ist die Oberfläche bzw. das Material der Ummantelung 7 insbesondere dann, wenn seine Eigenschaften bei Kontakt mit dem Desinfektionsmittel, insbesondere über mindestens 15 Minuten, nicht verändert bzw. beeinträchtigt werden. Hierzu oder alternativ kann eine Prüfung gemäß DIN EN ISO 175 in der Version 2011-03 zugrunde gelegt werden.

Weiter ist bevorzugt, dass die Ummantelung 7 zumindest im Wesentlichen unterbrechungsfrei den Innenschlauch 2 umgibt und/oder mit dem oder den Anschlussstücken) 4 derart verbunden ist, dass eine Desinfizierbarkeit entsprechender Übergänge gewährleistet ist.

Es erfolgt bevorzugt ein desinfizierbarer Anschluss der Ummantelung 7 an die Anschlussstücke 4. Insbesondere erstreckt sich die Ummantelung 7 ununterbrochen zwischen den Anschlussstücken 4 und ist mit diesen derart verbunden, dass ein Eintreten von Krankheitserregern wie Bakterien oder Viren in den Zwischenraum zwischen Innenschlauch 2 und Ummantelung 7, die durch ein Desinfektionsmittel von außen nicht zu erreichen sind, vermieden wird.

Der Anschluss der Ummantelung 7 an das jeweilige Anschlussstück 4 kann dichtend bzw. dicht, insbesondere gegenüber Eintritt von Bakterien, Wasser und/oder Ethanol, sein. Hierzu kann zwischen der Ummantelung 7 und dem jeweiligen Anschlussstück 4 ein Dichtmittel vorgesehen sein oder die Ummantelung 7 selbst dichtet den Anschluss der Ummantelung 7 an das jeweilige Anschlussstück 4 ab. Soweit sich zwischen der Ummantelung 7 und dem jeweiligen Anschlussstück 4 Ritzen oder Spalte ergeben, sind diese bevorzugt so ausgebildet, dass Desinfektionsmittel eindringen und eine Außenseite des Druckschlauchs 1, die durch Oberflächen der Ummantelung 7 und des Anschlussstücks 4 bzw. der Anschlusstücke 4 gebildet sein kann, folglich vollständig desinfizierbar ausgebildet ist.

Einzelne Aspekte der vorliegenden Erfindung können miteinander kombiniert werden und in unterschiedlichen Kombinationen verschiedene vorteilhafte Wirkungen entfalten, auch wenn einzelne Kombinationen nicht explizit aufgeführt sind.

### Bezugszeichenliste:

- 1: Druckschlauch
- 2: Innenschlauch
- 3: Schlauchende
- 4: Anschlussstück
- 5: Schlauchende
- 6: Anschlussstück
- 7: Ummantelung
- 8: Klemmelement

## Patentansprüche

1. Druckschlauch (1) für ein wasserführendes System zum Anschließen von Sanitärarmaturen, mit einem vorzugsweise gewellten Innenschlauch (2) aus Kunststoff zur Führung eines Wasserstroms und mit wenigstens einem abweichend zum Innenschlauch (2) ausgebildeten Anschlussstück (4, 6) an einem Schlauchende (3, 5) des Innenschlauchs (2), wobei das Anschlussstück (4, 6) eine Anschlussgeometrie zur Verbindung mit einem komplementär ausgebildeten Anschlussstück einer Sanitärarmatur aufweist, wobei der Innenschlauch (2) und das Anschlussstück (4, 6) einstückig und aus demselben Material hergestellt sind,
**dadurch gekennzeichnet,**
**dass** der Innenschlauch (2) von einem Glattschlauch umhüllt ist, und
**dass** der Innenschlauch (2) und der Glattschlauch zumindest an den Schlauchenden (5) flüssigkeitsdicht miteinander verbunden sind.

2. Druckschlauch nach Anspruch 1, **dadurch gekennzeichnet, dass** der Glattschlauch die äußere Mantelfläche des Druckschlauchs (1) bildet.

3. Druckschlauch nach Anspruch 1 oder 2, **dadurch gekennzeichnet, dass** der Glattschlauch unmittelbar gegen den Innenschlauch (2) anliegt.

4. Druckschlauch nach einem der vorhergehenden Ansprüche, **dadurch gekennzeichnet, dass** der Innenschlauch (2) im Wesentlichen über seine gesamte Länge von dem Glattschlauch umhüllt ist.

5. Druckschlauch nach einem der vorhergehenden Ansprüche, **dadurch gekennzeichnet, dass** das Anschlussstück (4, 6) nicht oder lediglich abschnittsweise von dem Glattschlauch umhüllt ist.

6. Druckschlauch nach einem der vorhergehenden Ansprüche, **dadurch gekennzeichnet, dass** der Glattschlauch mittels eines Klemmelements (8), insbesondere einer Presshülse, auf den Innenschlauch (2) aufgepresst ist.

7. Druckschlauch nach einem der vorhergehenden Ansprüche, **dadurch gekennzeichnet, dass** der Druckschlauch (1) bei Betriebsdrücken von wenigstens 30 bar, vorzugsweise von wenigstens 40 bar, besonders bevorzugt von wenigstens 50 bar, oder mehr druckstabil ist.

8. Druckschlauch nach einem der vorhergehenden Ansprüche, **dadurch gekennzeichnet, dass** der Innenschlauch (2) und/oder ein Außenschlauch, insbesondere der Glattschlauch, aus einem bei Fluidtemperaturen von wenigstens 90 °C, vorzugsweise von wenigstens 100 °C, beständigen Kunststoff besteht und/oder einen solchen Kunststoff aufweist.

9. Druckschlauch nach einem der voranstehenden Ansprüche, **dadurch gekennzeichnet, dass** der Glattschlauch eine Ummantelung (7) ist, die eine desinfizierbare Oberfläche des Druckschlauchs (1) bildet.

10. Druckschlauch nach Anspruch 9, **dadurch gekennzeichnet, dass** der Glattschlauch desinfektionsmittelbeständig ist, insbesondere zumindest außenseitig beständig gegenüber Ethanol und/oder chloridhaltigendem Desinfektionsmittel.

11. Druckschlauch nach Anspruch 9 oder 11, **dadurch gekennzeichnet, dass** der Glattschlauch temperaturbeständig bis mindestens 120 °C ist.

12. Druckschlauch nach einem der Ansprüche 9 bis 12, **dadurch gekennzeichnet, dass** der Glattschlauch zumindest außenseitig beständig gegenüber Wasserdampf ist.

13. Druckschlauch nach einem der voranstehenden Ansprüche, **dadurch gekennzeichnet, dass** der Druckschlauch (1) frei von einer äußeren Umflechtung des Innenschlauchs (2) ausgebildet ist.

14. Druckschlauch nach einem der voranstehenden Ansprüche, **dadurch gekennzeichnet, dass** der Innenschlauch (2) und das Anschlussstück (4, 6) durch Extrusion in einem gemeinsamen, vorzugsweise kontinuierlichen, Extrusionsprozess hergestellt sind und der Innenschlauch (2) und das Anschlussstück (4, 6) ein einstückiges Extrusionsteil bilden, vorzugsweise wobei der Innenschlauch (2) und das Anschlussstück (4, 6) entlang einer gemeinsamen Mittellängsachse des Druckschlauchs (1) verlaufen und das Anschlussstück (4, 6) ein freies Schlauchende (3, 5) des Druckschlauchs (1) bildet.

## Claims

1. Pressure hose (1) for a water-carrying system for connecting sanitary fittings, having a preferably corrugated inner hose (2) made of plastic for guiding a water flow and having at least one connecting piece (4, 6), which is designed differently from the inner hose (2), at a hose end (3, 5) of the inner hose (2), wherein the connection piece (4, 6) has a connection geometry for connection to a complementary connection piece of a sanitary fitting, wherein the inner hose (2) and the connection piece (4, 6) are manufactured in one piece and from the same material,
**characterized in**
**that** the inner hose (2) is covered by a smooth tube, and
**that** the inner hose (2) and the smooth tube are connected to each other in a liquid-tight manner at least at the tube ends (5).

2. Pressure hose according to claim 1, **characterized in that** the smooth hose forms the outer jacket surface of the pressure hose (1).

3. Pressure hose according to claim 1 or 2, **characterized in that** the smooth hose directly abuts the inner hose (2).

4. Pressure hose according to one of the preceding claims, **characterized in that** the inner hose (2) is encased by the smooth hose over substantially its entire length.

5. Pressure hose according to one of the preceding claims, **characterized in that** the connecting piece (4, 6) is not covered or only partially covered by the smooth hose.

6. Pressure hose according to one of the preceding claims, **characterized in that** the smooth hose is pressed onto the inner hose (2) by means of a clamping element (8), in particular a press sleeve.

7. Pressure hose according to one of the preceding claims, **characterized in that** the pressure hose (1) is pressure-stable at operating pressures of at least 30 bar, preferably of at least 40 bar, particularly preferably of at least 50 bar, or more.

8. Pressure hose according to one of the preceding claims, **characterized in that** the inner hose (2) and/or an outer hose, in particular the smooth hose, consists of and/or comprises a plastic which is resistant to fluid temperatures of at least 90 °C, preferably of at least 100 °C.

9. Pressure hose according to one of the preceding claims, **characterized in that** the smooth hose is a sheathing (7) which forms a disinfectable surface of the pressure hose (1).

10. Pressure hose according to claim 9, **characterized in that** the smooth hose is resistant to disinfectants, in particular resistant to ethanol and/or chloride-containing disinfectants at least on the outside.

11. Pressure hose according to claim 9 or 11, **characterized in that** the smooth hose is temperature-resistant up to at least 120 °C.

12. Pressure hose according to one of claims 9 to 12, **characterized in that** the smooth hose is resistant to water vapour at least on the outside.

13. Pressure hose according to one of the preceding claims, **characterized in that** the pressure hose (1) is free of an outer braiding of the inner hose (2).

14. Pressure hose according to one of the preceding claims, **characterized in that** the inner hose (2) and the connecting piece (4, 6) are produced by extrusion in a common, preferably continuous, extrusion process and the inner hose (2) and the connecting piece (4, 6) form a one-piece extrusion part, preferably wherein the inner tube (2) and the connecting piece (4, 6) extend along a common central longitudinal axis of the pressure tube (1) and the connecting piece (4, 6) forms a free tube end (3, 5) of the pressure tube (1).

## Revendications

1. Tuyau flexible sous pression (1) pour un système de transport d'eau destiné à raccorder de la robinetterie sanitaire, avec un tuyau flexible intérieur (2) de préférence ondulé en matière plastique destiné à guider un flux d'eau et avec au moins une pièce de raccordement (4, 6) réalisée différemment du tuyau flexible intérieur (2) sur une extrémité de tuyau flexible (3, 5) du tuyau flexible intérieur (2), dans lequel la pièce de raccordement (4, 6) présente une géométrie de raccordement destinée à être reliée à une pièce de raccordement, réalisée de manière complémentaire, d'une robinetterie sanitaire, dans lequel le tuyau flexible intérieur (2) et la pièce de raccordement (4, 6) sont fabriqués d'un seul tenant et à partir du même matériau,
**caractérisé en ce**
**que** le tuyau flexible intérieur (2) est recouvert d'un tuyau flexible lisse, et
**que** le tuyau flexible intérieur (2) et le tuyau flexible lisse sont reliés l'un à l'autre de manière étanche aux liquides au moins sur les extrémités de tuyau flexible (5).

2. Tuyau flexible sous pression selon la revendication 1, **caractérisé en ce que** le tuyau flexible lisse forme la surface enveloppante extérieure du tuyau flexible sous pression (1).

3. Tuyau flexible sous pression selon la revendication 1 ou 2, **caractérisé en ce que** le tuyau flexible lisse repose directement contre le tuyau flexible intérieur (2).

4. Tuyau flexible sous pression selon l'une quelconque des revendications précédentes, **caractérisé en ce que** le tuyau flexible intérieur (2) est recouvert du tuyau flexible lisse sensiblement sur la totalité de sa longueur.

5. Tuyau flexible sous pression selon l'une quelconque des revendications précédentes, **caractérisé en ce que** le tuyau de raccordement (4, 6) n'est pas recouvert ou est recouvert seulement par endroits du tuyau flexible lisse.

6. Tuyau flexible sous pression selon l'une quelconque des revendications précédentes, **caractérisé en ce que** le tuyau flexible lisse est pressé sur le tuyau flexible intérieur (2) au moyen d'un élément de serrage (8), en particulier d'un manchon de compression.

7. Tuyau flexible sous pression selon l'une quelconque des revendications précédentes, **caractérisé en ce que** le tuyau flexible sous pression (1) est stable à la pression à des pressions de service d'au moins 30 bar, de préférence d'au moins 40 bar, de manière particulièrement préférée d'au moins 50 bar ou plus.

8. Tuyau flexible sous pression selon l'une quelconque des revendications précédentes, **caractérisé en ce que** le tuyau flexible intérieur (2) et/ou un tuyau flexible extérieur, en particulier le tuyau flexible lisse, sont constitués d'une matière plastique résistante à des températures de fluide d'au moins 90 °C, de préférence d'au moins 100 ° et/ou présentent une matière plastique de ce type.

9. Tuyau flexible sous pression selon l'une quelconque des revendications précédentes, **caractérisé en ce que** le tuyau flexible lisse est une gaine (7), qui forme une surface du tuyau flexible sous pression (1) pouvant être désinfectée.

10. Tuyau flexible sous pression selon la revendication 9, **caractérisé en ce que** le tuyau flexible lisse est résistant à des agents de désinfection, en particulier est résistant au moins du côté extérieur à des agents de désinfection contenant de l'éthanol et/ou du chlorure.

11. Tuyau flexible sous pression selon la revendication 9 ou 11, **caractérisé en ce que** le tuyau flexible lisse est résistant à des températures jusqu'à au moins 120 °C.

12. Tuyau flexible sous pression selon l'une quelconque des revendications 9 à 12, **caractérisé en ce que** le tuyau flexible lisse est résistant au moins du côté extérieur à la vapeur d'eau.

13. Tuyau flexible sous pression selon l'une quelconque des revendications précédentes, **caractérisé en ce que** le tuyau flexible sous pression (1) est réalisé sans un tressage extérieur du tuyau flexible intérieur (2).

14. Tuyau flexible sous pression selon l'une quelconque des revendications précédentes, **caractérisé en ce que** le tuyau flexible intérieur (2) et la pièce de raccordement (4, 6) sont fabriqués par extrusion dans un processus d'extrusion commun, de préférence continu, et le tuyau flexible intérieur (2) et la pièce de raccordement (4, 6) forment une partie d'extrusion d'un seul tenant, de préférence dans lequel le tuyau flexible intérieur (2) et la pièce de raccordement (4, 6) s'étendent le long d'un axe longitudinal central commun du tuyau flexible sous pression (1) et la pièce de raccordement (4, 6) forme une extrémité de tuyau flexible libre (3, 5) du tuyau flexible sous pression (1).
